Europäisches Patentamt

(19) European Patent Office

Office européen des brevets

(11) Publication number: **0 138 316**

**B1**

(12) **EUROPEAN PATENT SPECIFICATION**

(45) Date of publication of patent specification: **13.07.88**

(21) Application number: **84305351.3**

(22) Date of filing: **07.08.84**

(51) Int. Cl.⁴: **H 01 M 4/50, H 01 M 10/36, C 01 G 45/00, C 01 G 45/02**

(54) **Rechargeable manganese dioxide electrode material.**

(30) Priority: **08.08.83 US 521473**

(43) Date of publication of application:
**24.04.85 Bulletin 85/17**

(45) Publication of the grant of the patent:
**13.07.88 Bulletin 88/28**

(84) Designated Contracting States:
**DE FR GB IT**

(56) References cited:
**US-A-4 268 589**
**US-A-4 384 029**

**CHEMICAL ABSTRACTS, vol. 45, no. 1, January 10, 1951, Columbus, Ohio, USA A.D. WADSLEY "Synthesis of some hydrated manganese minerals" abstract no. 503a**

**CHEMICAL ABSTRACTS, vol. 44, no. 14, July 25, 1950, Columbus, Ohio, USA A.D. WADSLEY "A hydrous manganese oxide with exchange properties" abstract no. 6327h**

(73) Proprietor: **FORD MOTOR COMPANY LIMITED**
**Eagle Way**
**Brentwood Essex CM13 3BW (GB)**
㊾ **GB**

(73) Proprietor: **FORD-WERKE AKTIENGESELLSCHAFT**
**Ottoplatz 2 Postfach 21 03 69**
**D-5000 Köln 21 (DE)**
㊾ **DE**

(73) Proprietor: **FORD FRANCE SOCIETE ANONYME**
**344 Avenue Napoléon Bonaparte B.P. 307**
**F-92506 Rueil Malmaison Cedex (FR)**
㊾ **FR**

(73) Proprietor: **Ford Motor Company**
**One Parklane Boulevard Parklane Towers East**
**Dearborn Michigan 48126 (US)**
㊾ **IT**

(72) Inventor: **Yu Yao, Yung-Fang**
**26104 Sheanhan Drive**
**Dearborn Heights Michigan 58127 (US)**
Inventor: **Gupta, Nirmal Kumar**
**41536 Greenwood Court**
**Canton Michigan 48147 (US)**

Courier Press, Leamington Spa, England.

Inventor: **Kummer, Joseph Talbot**
**3904 Golfside**
**Ypsilanti Michigan 48197 (US)**
Inventor: **Wroblowa, Halina Stefania**
**5192 Richard Run West**
**West Bloomfield, Michigan 48033 (US)**


(74) Representative: **Messulam, Alec Moses et al**
**A. Messulam & Co. 24 Broadway**
**Leigh on Sea Essex SS9 1BN (GB)**

### Description

This invention relates to an electrode for a battery cell. In particular, the invention provides a rechargeable manganese dioxide electrode initially rechargeable up to about 90% of its theoretical two electron capacity. After 200 cycles, the electrode still retains above 40% of its theoretical two electron capacity.

The manganese dioxide electrode has found wide application as a primary battery. One of the applications of such an electrode is in batteries used for a flashlight. The use of a flashlight is characteristic for an energy storage problem on a small scale; chemically stored energy is converted into electricity at will. A high price is paid for this conversion convenience. The throw-away battery may cost ten times the energy it stores simply to manufacture the battery. This is an important economic point of view considering that billions of these types of throw-away batteries are produced yearly throughout the world.

It is already known that manganese dioxide cells of the alkaline version can be recharged a limited number of times so long as the cells are not discharged on their discharge cycle more than about 15% of their two electron capacity. Normally these cells can be recharged at this very reduced fraction of their two electron capacity only about 50 cycles or so. Thus, it is known that certain manganese dioxide cells of the alkaline version can be recharged for approximately 50 cycles or so if the reactant (manganese dioxide) utilization does not exceed about 15%. Manganese electrodes of the invention can be discharged a substantially greater amount than known cells and may go through the discharge/recharge cycle a significant number of cycles more than the presently known cells.

In a cell having a manganese dioxide electrode, the homogeneous reaction mechanism of the first step of the manganese dioxide discharge is unique. The introduction of protons in this discharge is largely reversible so long as the expansion of the structure can be kept small. If the depth of discharge is limited to about 10—15% of the two electron capacity of the manganese dioxide electrode, the electrode may be recharged to full capacity for approximately 50 cycles or so as has been stated above.

With the improved rechargeable manganese dioxide electrode material of this invention, electrodes can be initially discharged up to 90% of their total two electron capacity. Such electrode containing cells are cycles in excess of 200 cycles between a discharged and recharged condition before their capacity dropped to about 40% if we limit the depth of the theoretical two electron capacity.

Chemical Abstract Volume 45, No. 1, 503a. 10th January 1951 discloses that hydrated Mn oxides containing Ba, Pb, Zn, Cu, Al, Li and Ca were prepared by agitating Na compound with an excess of a 10% solution of metal salt, washing and drying by aspiration.

A search was conducted on the subject matter of this specification in the U.S. Patent and Trademark Office. As a result of that search, the following U.S. patents were cited as of interest; 3,066,179; 3,433,687; 3,615,833; 3,915,837; 4,009,052; 4,041,220; 4,049,887; 4,121,018; 4,125,687 and 4,268,589.

U.S. patent 4,268,589 discloses an alkaline manganese dioxide cell which can be repeatedly recharged from a discharged state. This cell is made by chemically contacting the manganese dioxide with free negative ions of at least one weak acid that does not, in conditions prevailing in the cell, form salts with the manganese, the crystals of which contain water of crystallization. This patent further disclosed that suitable weak acids were silicic, carbonic, boric, cyanic and acidic acids and hydrogen sulfide.

According to the invention there is provided a rechargabe manganese dioxide electrode including a complex oxide selected from a bismuth manganese dioxide complex, a lead manganese dioxide complex, and a lead-bismuth manganese dioxide complex, graphite or carbon black and an organic binder and/or gelling agent.

The introduction of bismuth, lead, and mixtures of bismuth and lead into the manganese dioxide electrode vastly improves not only the depth of discharge from which the electrode material may be recharged, but also the number of times that the electrode material may be discharged and thereafter recharged while retaining high capacity. Substantial improvement of the reactant utilization as well as of the number of times the cell can be cycled comes about only when bismuth, lead, or mixtures of bismuth and lead are included as an active element in the electrode material. Materials such as potassium, sodium, calcium, manganese, copper, zinc, aluminum, and silver were tested and found not to be of any significant value in improving the rechargeability of a manganese dioxide electrode.

According to a preferred, but not limiting, embodiment of the improved manganese dioxide electrode material of this invention, the material is characterized in the following manner.

Prior to forming the manganese dioxide electrode material, a chemically reactable form of manganese dioxide is chemically reacted with a metal salt in which the metal is a heavy metal selcted from the group of heavy metals consisting of bismuth, lead, and mixtures of bismuth and lead, thereby to form a heavy metal salt of manganese dioxide. The heavy metal salt of manganese dioxide is used with other materials such as graphite powder or carbon black to form the improved manganese dioxide electrode material having the heavy metal included as an active element thereof. This heavy metal containing manganese dioxide electrode material can be formed into a cell, the cell being one of which may be discharged to a substantial extent of its two electron capacity for a substantial number of discharge/recharge cycles, the extent of discharge and number of discharge cycles being substantially in excess of those characteristics for presently known manganese dioxide electrode containing cells.

Another, but not limiting, embodiment of an improved manganese dioxide electrode material is taught in this specification. In this embodiment, the improved manganese dioxide electrode material is characterized in that prior to forming the electrode material, an ion exchangeable form of manganese dioxide is ion exchanged with a solution containing a heavy metal ion selected from the group of heavy metal ions consisting of bismuth, lead, and mixtures of bismuth and lead. This ion exchange operation forms a heavy metal salt of manganese dioxide. The heavy metal salt of manganese dioxide is used with other materials such as graphite powder or carbon black to form the improved manganese dioxide electrode material having the heavy metal included as an active element thereof. As noted above, the heavy metal containing manganese dioxide electrode material is one which has significantly superior qualities with respect to the utilization of the reactant and number of cycles of discharge/recharge over known rechargeable manganese dioxide electrode containing cells.

The invention is further described in specific examples and with reference to the accompanying drawing which is a graph of the Percent of Utilization of a Reactant In a Non-Optimized Electrode as a Function of Cycle Number.

As stated above, if a manganese dioxide electrode material is characterised in that a heavy metal selected from the group consisting of bismuth, lead, and mixtures of bismuth and lead is included as an active element therein, the manganese dioxide electrode has certain advantageous characteristics. These advantageous characteristics are that the number of cycles the electrode can undergo maintaining high reactant utilisation substantially greater than it was observed for any previously known manganese dioxide rechargeable electrode materials. Such advantages will be pointed in greater detail hereinbelow.

In accordance with a preferred embodiment of this specification, a skilled artisan will be taught what is classified as a "chemical method" for preparing the improved manganese dioxide electrode material in accordance with the invention. EPO 146201A discloses what is classifed as a "physical method" for preparing a manganese dioxide electrode material.

## Examples

### 1. Lead-manganese dioxide complex

This example will show the invention in the improved manganese dioxide electrode material by illustrating a material in which lead is included as an active element in the manganese dioxide electrode material. The material illustrated is prepared by a chemical method.

The precursor $NaMn_xO_y \cdot ZH_2O$ was prepared according to the procedure given by Wadsely in JACS, Vol. 72, 1781 (1950), as follows. Solution A formed of 110 grams NaOH in 500 ml $H_2O$ was cooled in an ice bath before being added slowly into a solution B of 60 g $Mn(NO_3)_2 \cdot 6 H_2O$ in 400 ml of water that was held at 3—5°C. The $Mn(OH)_2$ that precipitated out was slowly oxidized by passing oxygen through a fritted glass tube into the solution still held at 3—5°C for five hours with agitation followed by standing overnight. The solid was suction filtered and was washed 10 times with distilled water. It was dried over a warm plate at approximately 50°C for one day. The product was analyzed by ICP-AES and found to contain 48% Mn and 7.5% Na. An x-ray diffraction pattern showed that the major components are $(Na \cdot Mn)_4 \cdot Mn_{12}O_{28} \cdot 8H_2O$, $Na_4Mn_{14}O_{27} \cdot 9H_2O$, and a minor amount of Hausmanite. The surface area was determined by Krypton adsorption as 50 $m^2/g$.

The complex oxide, $PbMn_xO_y \cdot ZH_2O$, was prepared by an ion exchange method. This is the heavy metal (lead) containing manganese dioxide material to be used as the improved manganese dioxide electrode material. One gram of the precursor, as prepared above, was shaken in 10 ml of solution containing 1.9 g $P_b(NO_3)_2$ (about five times of the stoichiometric amount required) for 16 hours. After exchange, the solid was filtered and repeatedly washed with distilled water. It was dried again at temperatures slightly above 50°C.

20 milligrams of the lead manganese dioxide compound was ground for 18 hours in a pestle and mortar. This ground material was mixed for about 10 minutes with graphite (SP-1) powder in a spex-mixture mill. One gram of 9M KOH solution containing 4% by weight of an organic gelling agent was then added and a paste prepared by shaking for an additional five minutes. Electrodes were prepared by sandwiching about 200 milligrams of the prepared paste between two platinum gauze current collectors, themselves being sandwiched between two sheets of Celgard No. 3401 separators.

The paste electrode (1.9 cm (0.75") in diameter) was further wrapped in two additional sheets of Celgard (Regd Trade Mark) No. 3401 separator and epoxyed on one side with Epoweld (Regd Trade Mark), No. 3673 cement. The electrode was inserted in a 1.9 cm (0.75 inch) diameter (ID) Teflon® tube, pressed at about 10 pounds per square inch, and allowed to cure for 24 hours at room temperature. The electrode was cycled at 0.5 mV/second in the range −0.6V to +0.2 V (with respect to a Hg/HgO electrode). The results of this cycling are shown in the drawing as curve No. 1. This curve shows that when lead is used, the improved manganese dioxide electrode material may be recycled a substantial number of times in excess of 50 cycles and may be discharged in its highly cycled state to about 30% or more of its two electron capacity. This is substantially greater than known rechargeable manganese dioxide electrode materials which may be recycled at a maximum of only about 50 times with a discharge utilization of approximately 10—15% of its two electron capacity.

## 2. Bismuth manganese dioxide complex

This example will show the invention in the improved manganese dioxide electrode material by illustrating a material in which bismuth is included as an active element in the manganese dioxide electrode material. The material illustrated is also prepared by a chemical method.

The precursor $NaMn_xO_y \cdot ZH_2O$ complex was prepared in the same manner as discussed above in Example 1. This precursor was ion exchanged with bismuth in the following manner to form the heavy metal (bismuth) containing manganese dioxide electrode material to be used as the improved manganese dioxide electrode. A solution of 14.6 g $Bi(NO_3)_3 \cdot 5H_2O$ and 10 ml concentrated nitric acid in 100 ml of water was used for exchange. Dilute nitric acid instead of water was used to wash the filtered solid. The product contains 50% manganese, 12% bismuth, and less than .2% sodium. X-ray diffraction identified the product structure to be isomorphous to that of $Mn_7O_{13} \cdot 5H_2O$.

15 milligrams of the bismuth/manganese dioxide compound was ground for 18 hours in a pestle and mortar and then was mixed with graphite (SP-1) powder for approximately 10 minutes in a spex-mixer mill. 125 mg of 9M KOH solution containing 4% by weight of an organic gelling agent was then added and a paste obtained by shaking for an additional five minutes. Approximately 0.5 cms (0.020″) thick by 1.9 cms (0.75″) in diameter modified manganese dioxide electrodes were prepared using about 200 mg of this paste according to the procedure in Example.

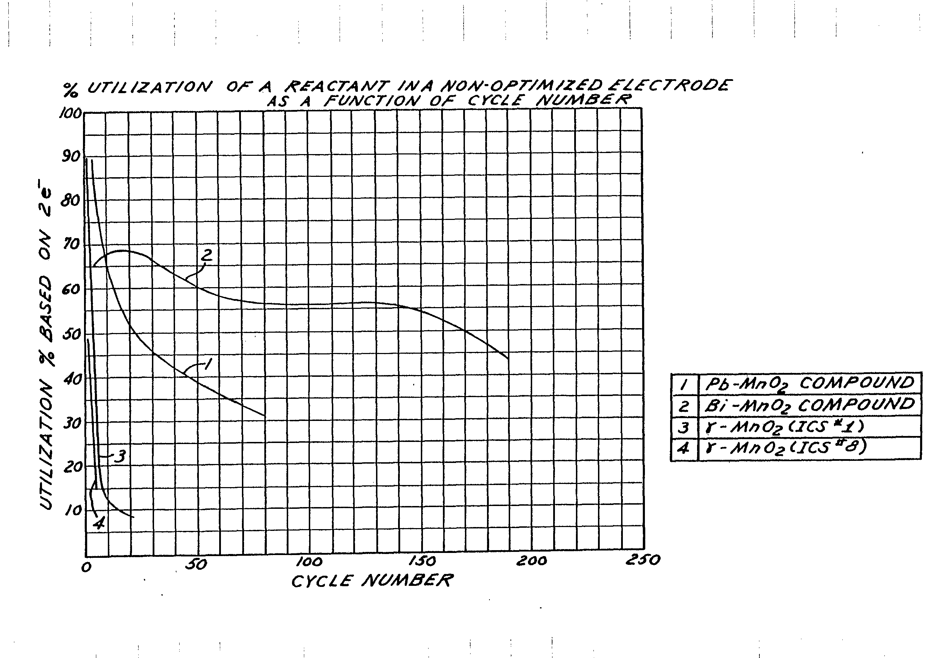

The results of cycling this electrode under the same conditions as in Example 1 are shown in the figure as curve 2. When bismuth is used as the heavy metal additive to the manganese dioxide electrode material, the graph of Figure 2 shows significant improvement is obtained over known commercial rechargeable electrode materials while very good improvements are also obtained over lead containing electrode material as depicted in curve No. 1. For example, at 100 cycles, the non-optimized bismuth containing electrode may still have a 55% or greater utilization based on its two electron capacity.

## 3. No heavy metal addition-manganese dioxide by itself

The purpose of this example is to illustrate that when no heavy metal addition of the type described above is made to an International Sample No. 1 of manganese dioxide, the utilization and recharge capabilities of the cell are extremely poor.

The procedure of Example 1 is carried out except that there is no need to react any elements in order to place bismuth or lead in conjunction with the manganese dioxide. Thus the manganese dioxide is used as described in the latter portion of Example 1 in order to manufacture an electrode which is subsequently made into a cell. The manganese dioxide used was a gamma manganese dioxide (International Common Sample No. 1). A cell produced using this material resulted in the data shown in the drawing as curve No. 3. This curve shows that the material can be cycled very little, and that very little cycling causes a disastrous loss in the utilization of the material based upon the percentage discharge one can obtain on the two electron capacity of the material.

## 4. No heavy metal addition-manganese dioxide by itself

The purpose of this example is to illustrate that when no heavy metal addition of the type described above is made to an International Sample No. 8 of manganese dioxide, the utilization and recharge capabilities of the cell are extremely poor.

The procedure of Example 3 was repeated except that the gamma manganese dioxide used was an International Common Sample No. 8. The capacity of this electrode material as a function of cycles number is shown in the drawing as curve No. 4. Once again, curve No. 4 shows an extremely poor material with respect to its ability to be recharged for a number of discharge/recharge cycles.

## General factors to be taken into account

In order to make the improved manganese dioxide electrode material, it is necessary to include in that material fine powdered carbon or graphite to aid in the electronic conductivity of the material.

While the examples have talked of substituting either lead or bismuth into the manganese dioxide structure, mixtures of lead and bismuth may be substituted.

An organic binder and/or gelling agent is also used in formation of the manganese dioxide electrode material. Normally the organic gelling agent is made up of 4% by weight of carboxy metal cellulose in 96% by weight of 9M KOH.

It may be seen from the information reported above and the material presented graphically in the Figure that the inclusion of bismuth, lead, or mixtures of bismuth and lead in the manganese dioxide electrode brings about a rechargeability which is not seen in the manganese dioxide electrode by itself. This rechargeability enhancement is unique for the bismuth, lead, and bismuth/lead mixtures.

## Claims

1. A rechargeable manganese dioxide electrode including a complex oxide selected from a bismuth manganese dioxide complex, a lead manganese dioxide complex, and a lead-bismuth manganese dioxide complex, graphite or carbon black and an organic binder and/or gelling agent.

2. An electrode as claimed in Claim 1, characterised in that said manganese dioxide complex is formed by ion exchange wherein a complex precursor of manganese dioxide is reacted with a solution of a salt selected from bismuth, lead and a mixture of bismuth and lead.

## Patentansprüche

1. Wiederauflad bare Mangandioxidelektrode, enthaltend ein komplexes Oxid, das unter einem Wismut-Mangandioxidkomplex, einem Blei-Mangandioxidkomplex und einem Blei-Wismut-Mangandioxidkomplex ausgewählt ist, Graphit oder Russ und ein organisches Bindemittel und/oder Geliermittel.

2. Elektrode nach Anspruch 2, dadurch gekennzeichnet, dass dieser Mangandioxidkomplex durch Ionenaustausch gebildet ist, wobei ein Komplexvorläufer aus Mangandioxid mit einer Lösung eines unter Wismut, Blei und einem Gemisch von Wismut und Blei ausgewählten Salzes umgesetzt wird.

## Revendications

1. Electrode rechargeable au bioxyde de manganèse, contenant un oxyde complexe choisi parmi un complexe de bioxyde de manganèse et de bismuth, un complexe de bioxyde de manganèse et de plomb, et un complexe de bioxyde de manganèse et de bismuth-plomb, du graphite ou du noir de carbone, et un liant et/ou un agent gélifiant organique.

2. Electrode selon la revendication 1, caractérisée en ce que le complexe de bioxyde de manganèse est formé par un échange d'ions au cours duquel un précurseur d'un complexe de bioxyde de manganèse réagit avec une solution d'un sel choisi parmi ceux du bismuth, du plomb et d'un mélange de bismuth et de plomb.

% UTILIZATION OF A REACTANT IN A NON-OPTIMIZED ELECTRODE AS A FUNCTION OF CYCLE NUMBER

| | |
|---|---|
| 1 | Pb-MnO$_2$ COMPOUND |
| 2 | Bi-MnO$_2$ COMPOUND |
| 3 | $\gamma$-MnO$_2$ (ICS #1) |
| 4 | $\gamma$-MnO$_2$ (ICS #8) |

0 138 316